# EUROPÄISCHE PATENTSCHRIFT

(11) **EP 2 759 372 B1**
(45) Veröffentlichungstag und Bekanntmachung des Hinweises auf die Patenterteilung: **19.11.2014**
(21) Anmeldenummer: 13152816.8
(22) Anmeldetag: 28.01.2013
(51) Int. Cl.: B23Q 17/00

(54) **Werkzeugmaschine und Verfahren zum Überwachen eines Spannzustands**
Machine tool and method for monitoring a clamping condition
Machine-outil et procédé destinés à la surveillance d'un état de tension

(43) Veröffentlichungstag der Anmeldung: 30.07.2014
(73) Patentinhaber: Schwäbische Werkzeugmaschinen GmbH, 78713 Schramberg-Waldmössingen (DE)
(72) Erfinder: Weber, Stefan Dipl.-Ing., 78662 Bösingen (DE)
(74) Vertreter: Kohler Schmid Möbus

(56) Entgegenhaltungen:
- WO-A1-2007/104438
- DE-A1-102011 100 126
- DE-B3-102010 011 318

## Beschreibung

Die Erfindung betrifft eine Werkzeugmaschine gemäß dem Oberbegriff des Anspruchs 1, wie z.B. aus der DE 10 2011 100126 bekannt.

Das Überwachen der korrekten Ausrichtung und/oder der korrekten Position von Werkzeugen oder Werkstücken spielt aufgrund der zunehmenden Automatisierung im Werkzeugmaschinenbau eine immer wichtigere Rolle. Moderne Werkzeugmaschinen umfassen heute häufig automatische Werkzeugwechselsysteme und/oder Einrichtungen zum Austausch bearbeiteter Werkstücke durch zu bearbeitende Werkstücke. Dies erhöht im Allgemeinen die Produktionsgeschwindigkeit und somit die Produktivität der Werkzeugmaschinen. Späne-Teilchen, wie beispielsweise bei der Werkstückbearbeitung anfallen, können sich jedoch zwischen einer Werkzeugaufnahme und dem Werkzeug oder zwischen einer Werkstückaufnahme und dem Werkstück ablagern, sodass das Werkzeug bzw. das Werkstück nachdem es (samt dem Späne-Teilchen) in die jeweils vorgesehene Aufnahme eingespannt wurde nicht wie gewünscht ausgerichtet bzw. positioniert ist. Eine Fehlausrichtung kann sich auch aus anderen Gründen einstellen. Damit ein reibungsloser Werkzeug- bzw. Werkstückwechsel möglich ist, muss daher die korrekte Ausrichtung oder Position des Werkzeugs bzw. des Werkstücks bezüglich der Werkzeugmaschine während oder nach jedem Wechsel geprüft werden. So wird das Auftreten von Fehlern in der Werkstückbearbeitung und auch die unsachgemäße Werkzeugabnutzung verhindert, an die sich andernfalls unerwünschte Reparatur-, Umrüst- oder Stillstandzeiten anschließen.

Bekanntermaßen kann eine solche Überwachung der korrekten Ausrichtung während des Werkzeugwechsels durch Druckluft-Systeme erreicht werden. Dazu sind beispielsweise in einer Anlagefläche einer Werkzeugaufnahme Bohrungen eingebracht, die nach dem Einwechseln des Werkzeugs bei stillstehendem Werkzeug mit Druckluft beaufschlagt werden. Mittels einer Durchflussmessung kann während des Maschinenstillstands auf eine korrekte Plananlage des Werkstücks an der Anlagefläche und somit auf die korrekte Ausrichtung des Werkzeugs geschlossen werden. Im Falle einer korrekten Ausrichtung kann der Bearbeitungsprozess anschließend aufgenommen werden. Allerdings ist die Genauigkeit der Druckluft-Systeme begrenzt und häufig nicht zufriedenstellend.

Neben den Druckluft-Systemen bestehen alternative Lösungen, bei denen an unterschiedlichen Messorten Abstände zwischen dem Werkzeug und der Werkzeugaufnahme durch induktive oder kapazitive Wegmesssensoren erfasst werden. Diese Systeme sind jedoch in der Regel vergleichsweise komplex im Aufbau.

Es ist demgegenüber die Aufgabe der Erfindung, eine Werkzeugmaschine bereitzustellen, die die Nachteile des Standes der Technik überwinden oder zumindest eine alternative Lösung bereitstellen. Insbesondere soll die Werkzeugmaschine eine genauere, einfacher und breiter einsetzbare Überwachung der korrekten Ausrichtung und/oder Position von Werkzeugen bzw. Werkstücken ermöglichen.

Diese Aufgabe wird durch eine Werkzeugmaschine gemäß Anspruch 1 gelöst.

Erfindungsgemäß können durch die Kraftsensoren an den entsprechenden Messorten die dort jeweils wirkenden Spannkräfte erfasst werden, d.h. diejenigen Kräfte, die das Werkzeug und/oder das Werkstück spannen. Eine sich zwischen unterschiedlichen Kraftsensoren bzw. Messorten einstellende Spannkraft-Abweichung zeigt dann an, dass das Werkzeug oder das Werkstück nicht korrekt ausgerichtet bzw. positioniert ist, sondern beispielsweise schräg eingespannt ist. Ist die Spannkraft-Abweichung dagegen verschwindend gering oder Null, zeigt dies entsprechend eine korrekte Ausrichtung an. Die Werkzeugmaschine kann zur Bestimmung einer solchen Spannkraft-Abweichung eine dazu ausgebildete Auswerteeinheit umfassen. Auf eine Abstandsmessung zwischen Werkzeug bzw. Werkstück und einer werkzeugmaschinenseitigen Aufnahme sowie auf Druckluft-Systeme kann bei der erfindungsgemäßen Werkzeugmaschine in vorteilhafter Weise verzichtet werden. Stattdessen erlaubt das erfindungsgemäße Erfassen der die Werkzeug- oder Werkstückeinspannung bewirkenden Spannkräfte das Überwachen des Spannzustands nicht nur kurzzeitig während des Werkzeug- bzw. Werkstückeinbaus, sondern auch während der gesamten Werkstückbearbeitung. So ist es möglich, den Verlauf des Kraftanstiegs während des Einbaus messtechnisch zu erfassen und zu verfolgen und die Werkstückbearbeitung beispielsweise durch eine Schnellabschaltung bei Verkeilen oder Kollision sicherer zu gestalten. Das erfindungsgemäße Erfassen der Spannkräfte kann in vorteilhafter Weise auch mit antriebsleistungsbasierten Prozessüberwachungssystemen beispielsweise zur vergleichenden Kontrolle oder zur Erhöhung der Genauigkeit gekoppelt werden. Aufgrund der hohen Empfindlichkeit und Genauigkeit, die übliche Kraftsensoren bieten, ist die erfindungsgemäße Überwachung der Ausrichtung und/oder Lage genauer als herkömmliche Systeme.

Bevorzugt sind die Kraftsensoren an einer bewegbar gelagerten Aufnahme für die Werkzeuge oder die Werkstücke angeordnet. Besonders bevorzugt ist die Aufnahme um eine Achse drehbar gelagert, und die Kraftsensoren sind drehsymmetrisch um die Achse angeordnet. Beispielsweise können die Kraftsensoren im Bereich einer als Hohlschaftkegel ausgebildeten Aufnahme, insbesondere an einer Anlagefläche einer Hohlschaftkegelaufnahme, angeordnet sein. Hohlschaftkegelaufnahmen sind bei spanenden Werkzeugmaschinen aufgrund ihres vergleichsweise sicheren Sitzes weit verbreitet.

Weiter bevorzugt sind mindestens drei bzgl. der Werkzeug- oder Werkstückaufnahme drehsymmetrisch angeordnete Kraftsensoren vorgesehen. Drei Kraftsensoren reichen aus, um das Werkzeug bzw. Werkstück auf korrekte Ausrichtung oder Position zu überwachen. Es versteht sich, dass die Genauigkeit der Ausrichtungsüberwachung durch eine höhere Anzahl an Kraftsensoren gesteigert werden kann.

Besonders bevorzugt sind die Kraftsensoren AOW-Sensoren (akustische Oberflächenwellen-Sensoren), und es sind Funkübertragungsmittel zum drahtlosen Senden und Empfangen von Funksignalen an die oder von den AOW-Sensoren vorgesehen. Die Funkübertragungsmittel können beispielsweise eine an dem AOW-Sensor angeordnete Sende-und/oder Empfangsantenne sowie eine ortsfest angeordnete Sende-und/oder Empfangseinheit umfassen. Die Energieversorgung und die Übertragung der AOW-Sensorsignale erfolgen dann ausschließlich über elektrische Funksignale. Die AOW-Sensoren können anhand einer individuellen Kennung identifiziert werden, selbst wenn eine vergleichsweise hohe Anzahl an AOW-Sensoren eingesetzt wird. Dadurch lässt sich jeder AOW-Sensor geometrisch der jeweiligen Messstelle und der dort erfassten Spannkraft zuordnen.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: eine erfindungsgemäße Werkzeugmaschine mit Kraftsensoren zum Überwachen der korrekten Ausrichtung und/oder Position eines Werkzeugs und eines Werkstücks;
- Fig. 2: ein in einer Spindel eingespanntes Werkzeug in einem Teilausschnitt der Fig.1;
- Fig. 3: einen als AOW-Sensor ausgebildeten Kraftsensor;
- Fig. 4: die Spindel der Fig. 1 mit einer Aufnahme für das Werkzeug, und
- Fig. 5: ein Flussdiagramm eines erfindungsgemäßen Verfahrens.

In der folgenden Beschreibung der Zeichnung werden für gleiche bzw. funktionsgleiche Bauteile identische Bezugszeichen verwendet.

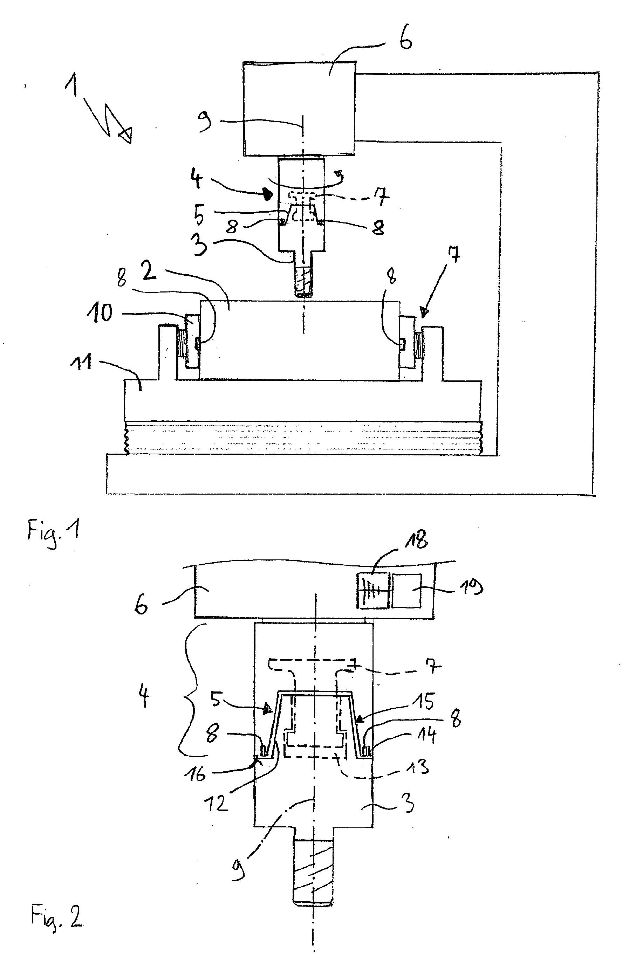

In **Fig. 1** ist eine Werkzeugmaschine **1** dargestellt, durch die ein Werkstück **2** spanend mittels eines Werkzeugs **3** (beispielsweise ein Bohrer oder Fräser) bearbeitet werden kann. Um eine Werkstückbearbeitung anhand unterschiedlicher Werkzeuge 3 (unterschiedliche Bohr- oder Fräsdurchmesser) zu ermöglichen, kann mittels eines Werkzeugwechslers das Werkzeug 3 durch entsprechende andere Werkzeuge 3 ausgetauscht werden. Das in Fig. 1 dargestellte Werkzeug 3 ist zur drehend spanenden Bearbeitung des Werkstücks 2 an einer motorisch angetriebenen Spindel **4** der Werkzeugmaschine 1 befestigt. Um ein relatives Verdrehen des Werkzeugs 3 gegenüber der Spindel 4 zu verhindern, ist das Werkzeug 3 mit bzw. in einer spindelseitigen Werkzeugaufnahme **5** kraftschlüssig verspannt. Die Spindel 4 bzw. die Werkzeugaufnahme 5 ist drehbar an einem werkzeugmaschinenseitigen Grundkörper **6** der Werkzeugmaschine 1 gelagert. Zum Spannen des Werkzeugs 3 weist die Werkzeugmaschine 1 eine Spanneinrichtung **7** auf, die das Werkzeug 3 in der Werkzeugaufnahme 5 festspannt.

Bei einer korrekten Ausrichtung fallen die Mittelachse **9** der Spindel 4 bzw. der Werkzeugaufnahme 5 und die Mittelachse des Werkzeugs 3 zusammen bzw. verlaufen kollinear zueinander. Beim Einbau des Werkzeugs 3 in die Werkzeugaufnahme 5 kann es vorkommen, dass beispielsweise ein Span zwischen das Werkzeug 3 und die spindelseitige Werkzeugaufnahme 5 gerät. Dann ist das Werkzeug 3 nicht korrekt, sondern beispielsweise schräg bezüglich der Spindel 4 ausgerichtet. Eine solche schräge Werkzeugausrichtung kann jedoch zu einer fehlerhaften Bearbeitung oder zu einer unerwünscht hohen Werkzeugabnutzung führen.

Um dies zu verhindern, weist die Spanneinrichtung 7 an unterschiedlichen Messorten Kraftsensoren **8** auf, um die jeweils an den unterschiedlichen Messorten wirkenden Spannkräfte zu erfassen. Bei den so erfassten Spannkräften handelt es sich um Reaktionskräfte, die aus dem Anziehen des Werkzeugs 3 gegen eine z.B. ringförmige Anlagefläche der spindelseitigen Werkzeugaufnahme 5 durch die Spanneinrichtung 7 resultieren. Die Kraftsensoren 8 sind an der Anlagefläche der spindelseitigen Werkzeugaufnahme 5 drehsymmetrisch um die Mittelachse 9 der Werkzeugaufnahme 5 angeordnet und erfassen daher bei korrekter (kollinearer) Ausrichtung des Werkzeugs 3 in der Werkzeugaufnahme 5 gleichgroße Spannkräfte. Werden von den Kraftsensoren 8 unterschiedlich große Spannkräfte erfasst, zeigt diese Spannkraft-Abweichung an, dass das Werkzeug 3 nicht korrekt (nicht kollinear zur Spindel 4) ausgerichtet ist, sondern schräg eingespannt oder anders fehlpositioniert ist.

Die Kraftsensoren 8 können die Spannkräfte nicht nur während des Werkzeugeinbaus, sondern auch während des gesamten Werkstück-Bearbeitungsprozesses erfassen und somit ständig durch Vergleich der erfassten Spannkraftwerte prüfen, ob eine korrekte Ausrichtung des Werkzeugs 3 gegeben ist. Das Werkzeug 3 ist in den Figuren als einstückiges Werkzeug 3 dargestellt. Es versteht sich jedoch, dass das Werkzeug 3 grundsätzlich auch mehrteilig, beispielsweise aus einem Bohr- oder Fräshalter und dem eigentlichen Bohrer bzw. Fräser, aufgebaut sein kann.

Das vorbeschriebene Problem der fehlerhaften Ausrichtung eingespannter Werkzeuge 3 existiert in analoger Weise auch für das Werkstück 2. Auch hier kann durch Späne, die beispielsweise zwischen das Werkstück 2 und einen Spannbacken **10** einer Werkstück-Spanneinrichtung 7 oder zwischen das Werkstück 2 und einen das Werkstück 2 lagernden Werkstücktisch **11** geraten, das Werkstück 2 eine falsche Position bzw. Ausrichtung einnehmen, sodass die Werkstückbearbeitung in der Folge fehlerhaft sein kann. Der Werkstücktisch 11 kann gegenüber dem Grundkörper 6 der Werkzeugmaschine 1 bewegbar gelagert sein, um das aufgenommene Werkstück 2 zur Bearbeitung variabel zu positionieren. Um eine solche Fehlausrichtung bzw. Fehlpositionierung des Werkstücks 2 zu verhindern, weist mindestens einer der beiden der Spannbacken 7, zwischen denen das Werkstück 2 eingespannt ist, mehrere Kraftsensoren 8 an der Spannbackenfläche auf. Durch die Kraftsensoren 8 sind die jeweiligen Spannkräfte erfassbar und können in analoger Weise zur Detektion einer Fehlausrichtung und/oder Fehlpositionierung miteinander verglichen werden.

**Fig. 2** zeigt einen detaillierteren Teilausschnitt der Fig. 1 im Bereich der Spindel 4. Darin ist der Grundkörper 6 der Werkzeugmaschine 1 teilweise und die Spindel 4 sowie das Werkzeug 3 vollständig im Querschnitt erkennbar. An dem Werkzeug 3 ist zum Spannen ein Hohlschaftkegel **12** ausgebildet, in dessen Inneren **13** die Spanneinrichtung 7 zum Ergreifen und Heranziehen des Werkzeugs 3 eindringen kann. Ferner weist das Werkzeug 3 eine den Hohlschaftkegel 12 umgebende Ringfläche **14** auf. Die Aufnahme 5 ist als Hohlschaftkegelaufnahme mit einer dem Hohlschaftkegel 12 entsprechenden Innenkegelfläche **15** und mit einer ringförmigen Anlagefläche **16** ausgebildet. Die Kraftsensoren 8 sind drehsymmetrisch um die Mittelachse 9 an der ringförmigen Anlagefläche 16 angeordnet und stehen mit ihren jeweiligen Messenden geringfügig über die ringförmigen Anlagefläche 16 vor.

Beim Einbau wird das Werkzeug 3 von der Spanneinrichtung 7 gegriffen und mittels der Kegelflächen zentriert in die Werkzeugaufnahme 5 gezogen, bis es mit seiner Ringfläche 14 an der ringförmigen Anlagefläche 16 anliegt. Dadurch werden die Kraftsensoren 8 zusammengedrückt, bis sie mit ihrem Messende bündig mit der ringförmigen Anlagefläche 16 abschließen. Die dabei auf das Werkzeug 3 wirkenden Spannkräfte werden von den Kraftsensoren 8 erfasst.

Die Kraftsensoren 8 sind als AOW-Sensoren (akustische Oberflächenwellen-Sensoren) ausgebildet, deren elektrische Signale drahtlos an eine Sende-und Empfangseinheit **18** des Grundkörpers 6 übertragen und in einer Auswerteeinheit **19** ausgewertet werden. Auch die Energieversorgung der AOW-Sensoren 8 ist drahtlos über die Sende-und Empfangsantenne möglich. Eine solche Funkübertragung ist vorteilhaft, da sich die AOW-Sensoren 8 im Betrieb mit der Spindel 4 mitdrehen. Die einzelnen AOW-Sensoren 8 können mittels einer individuellen Kennung von der Auswerteeinheit 19 identifiziert werden.

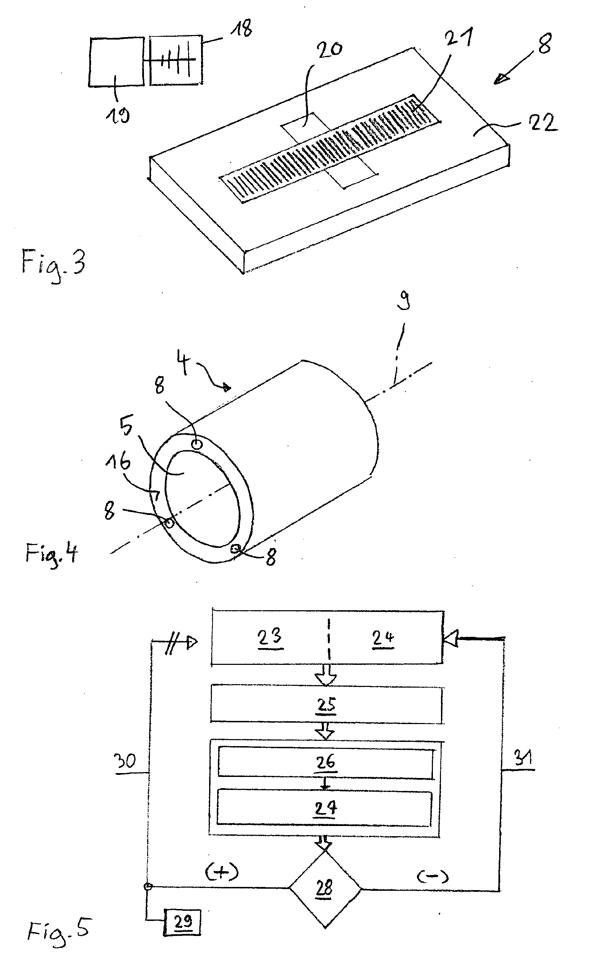

In **Fig. 3** sind zur Erläuterung des Messprinzips ein AOW-Sensor 8 und die Sende-und Empfangseinheit 18 samt Auswerteeinheit 19 dargestellt. Die Sende-und Empfangseinheit 18 weist in der Regel einen Oszillator auf, der hochfrequente elektromagnetische Impulse über eine Antenne abstrahlt. Der AOW-Sensor 8 weist ebenfalls eine Antenne **20,** einen mit dieser Antenne 20 verbundenen Interdigitalwandler (nicht gezeigt) sowie kammförmige Reflektoren **21** auf. Der Interdigitalwandler wird durch Funkimpulse der Sende-und Empfangseinheit 18 dazu angeregt, eine sich in einem piezoelektrischen Substrat **22** des Sensors 8 ausbreitende akustische Oberflächenwelle (AOW) zu erzeugen. Die akustische Oberflächenwelle ist eine Körperschallwelle, die sich auf der Oberfläche des Substrats 22 ausbreitet, d.h. ihre Eindringtiefe ist in der Regel auf eine oder wenige Wellenlängen begrenzt. Die Oberflächenwelle wird an den Reflektoren 21 reflektiert und erreicht erneut den Interdigitalwandler, wo sie zurückgewandelt und über die Antenne 20 abgestrahlt wird, um von der Sende-und Empfangseinheit 18 empfangen zu werden. Eine Änderung der mechanischen Spannung am AOW-Sensor 8 führt zu einer Veränderung der Ausbreitungsgeschwindigkeit der akustischen Oberflächenwelle und/oder zur Veränderung des geometrischen Abstandes der Reflektoren 21 zueinander. Dies wiederum hat eine Änderung der Laufzeit der von der Sende-und Empfangseinheit 18 ausgesendeten und empfangenen Funkimpulse zur Folge. Durch Auswertung der Laufzeitänderung kann auf die absolute Größe der am piezoelektrischen Substrat 22 wirkenden mechanischen Spannungen bzw. Kräfte geschlossen werden.

**Fig. 4** zeigt die Spindel 4 mit der Werkzeugaufnahme 5 und der Anlagefläche 16 in einer perspektivischen Ansicht. An der Werkzeugaufnahme 5 sind drei Kraftsensoren 8 drehsymmetrisch, also im 120°-Winkelabstand, um die Mittelachse 9 an der ringförmigen Anlagefläche 16 angeordnet und stehen mit ihren jeweiligen Messenden geringfügig über die ringförmigen Anlagefläche 16 vor. Dadurch kann eine Fehlposition oder Fehlausrichtung des Werkzeugs 3 mit ausreichender Genauigkeit detektiert werden.

Schließlich zeigt **Fig. 5** ein Flussdiagramm eines Verfahrens zum Überwachen des Spannzustands von mittels der Spanneinrichtung 7 gespannten Werkzeugen 3 oder Werkstücken 2. Wie in den Fign. 1 bis 4 beschrieben, wird durch das Spannen des Werkzeugs 3 mittels der Spanneinrichtung 7 entweder während des Werkzeugeinbaus **23** oder während der Werkstückbearbeitung **24** ein Spannzustand **25** erzeugt. Der Spannzustand 25 während des Werkzeugeinbaus 23 ist typischerweise zeitlich veränderlich (in der Regel nimmt die den Spannzustand 25 charakterisierende Gesamtspannung aufgrund der zunehmenden Spannkraft der Spanneinrichtung 7 zu), wohingegen der Spannzustand 25 während der Werkstückbearbeitung 24 in der Regel nahezu konstant bleibt.

Zum Überwachen des Spannzustands 25 werden in einem ersten Verfahrensschritt **26** die den Spannzustand 25 bewirkenden Spannkräfte mittels der mindestens zwei Kraftsensoren 8 erfasst und in einem zweiten Verfahrensschritt **27** die erfassten Spannkräfte miteinander verglichen. Die Spannkräfte können in dem ersten Verfahrensschritt 26 zu einem oder mehreren vorbestimmten Zeitpunkten oder kontinuierlich über einen vorbestimmten Zeitraum erfasst werden. Das Überwachen gemäß dem zweiten Verfahrensschritt 27 kann während des Werkzeugeinbaus 23 und/oder während der Werkstückbearbeitung 24 durchgeführt werden.

Ergibt der Vergleich 27 der erfassten Spannkräfte eine Spannkraft-Abweichung **28,** zeigt dies eine Fehlausrichtung des Werkzeugs 3 oder des Werkstücks 2 an, sodass ein Warnsignal **29** ausgegeben wird oder der Werkzeugeinbau 23 bzw. die Werkstückbearbeitung 24 abgebrochen **(30)** wird. Ergibt der Vergleich 27 der erfassten Spannkräfte keine Spannkraft-Abweichung 28, so kann der Werkzeugeinbau 23 bzw. die Werkstückbearbeitung 24 fortgesetzt **(31)** werden. Zur Entscheidung, ob eine Spannkraft-Abweichung 28 vorliegt, kann ein geeigneter Schwellenwert vorbestimmt sein.

## Patentansprüche

1. Werkzeugmaschine (1) mit einer Spindel (4), mit einer spindelseitigen Werkzeugaufnahme (5) zur Aufnahme eines einen Hohlschaftkegel (12) aufweisenden Werkzeugs (3) und mit einer Spanneinrichtung (7) zum Spannen des in der Werkzeugaufnahme (5) aufgenommenen Werkzeugs (3), bis das Werkzeug (3) mit einer den Hohlschaftkegel (12) umgebenden Ringfläche (14) an einer ringförmigen Anlagefläche (16) der Werkzeugaufnahme (5) anliegt, wobei die Spanneinrichtung (7) mindestens zwei Kraftsensoren (8) zum Erfassen der jeweils wirkenden Spannkräfte aufweist, um die korrekte Ausrichtung und/oder Position des aufgenommenen Werkzeugs (3) zu überwachten,
**dadurch gekennzeichnet,**
**dass** die Kraftsensoren (8) an der ringförmigen Anlagefläche (16) der Werkzeugaufnahme (5) angeordnet sind und über die ringförmige Anlagefläche (16) überstehen, um die jeweils wirkenden Spannkräfte zu erfassen.

2. Werkzeugmaschine nach Anspruch 1, **dadurch gekennzeichnet, dass** die Aufnahme (5) um eine Achse (9) drehbar gelagert ist und die Kraftsensoren (8) an der ringförmigen Anlagefläche (16) drehsymmetrisch um die Achse (9) angeordnet sind.

3. Werkzeugmaschine nach einem der vorhergehenden Ansprüche, **dadurch gekennzeichnet, dass** mindestens drei Kraftsensoren (8) vorgesehen sind.

4. Werkzeugmaschine nach einem der vorhergehenden Ansprüche, **dadurch gekennzeichnet, dass** die Kraftsensoren AOW-Sensoren (8) sind, und dass Funkübertragungsmittel (18, 20) zum drahtlosen Senden und Empfangen von Funksignalen an die oder von den AOW-Sensoren (8) vorgesehen sind.

## Claims

1. Machine tool (1) comprising a spindle (4), a tool holder (5) on the spindle side for receiving a tool (3) having a hollow shank taper (12) and a clamping device (7) for clamping the tool (3) received in the tool holder (5) until an annular area (14) of the tool (3) surrounding the hollow shank taper (12) abuts an annular contact surface (16) of the tool holder (5), wherein the clamping device (7) has at least two force sensors (8) for detecting the respectively acting clamping forces in order to monitor the correct alignment and/or position of the received tool (3),
**characterized in that** the force sensors (8) are arranged on the annular contact surface (16) of the tool holder (5) and project past the annular contact surface (16) in order to detect the respectively acting clamping forces.

2. Machine tool according to claim 1, **characterized in that** the holder (5) is supported to be rotatable about an axis (9) and the force sensors (8) are arranged on the annular contact surface (16) to be rotationally symmetric about the axis (9).

3. Machine tool according to any one of the preceding claims, **characterized in that** at least three force sensors (8) are provided.

4. Machine tool according to any one of the preceding claims, **characterized in that** the force sensors are SAW sensors (8) and radio transmission means (18, 20) are provided for wireless transmission and reception of radio signals to or from the SAW sensors (8).

## Revendications

1. Machine-outil (1) avec une broche (4), avec un porte-outil (5) côté broche, destiné à recevoir un outil (3) présentant un cône creux (12), et avec un dispositif de serrage (7) pour serrer l'outil (3) reçu dans le porte-outil (5) jusqu'à ce que l'outil (3) s'applique, par une surface annulaire (14) entourant le cône creux (12), contre une surface d'appui annulaire (16) du porte-outil (5), sachant que le dispositif de serrage (7) présente aux moins deux capteurs de force (8) pour détecter les forces de serrage agissantes respectives afin de surveiller l'orientation correcte et/ou la position correcte de l'outil reçu (3),
**caractérisée en ce que** les capteurs de force (8) sont disposés sur la surface d'appui annulaire (16) du porte-outil (5) et dépassent de la surface d'appui annulaire (16) afin de détecter les forces de serrage agissantes respectives.

2. Machine-outil selon la revendication 1, **caractérisée en ce que** le porte-outil (5) est monté à rotation autour d'un axe (9) et les capteurs de force (8) sont disposés sur la surface d'appui annulaire (16) en étant symétriques en rotation autour de l'axe (9).

3. Machine-outil selon l'une des revendications précédentes, **caractérisée en ce qu'**il est prévu au moins trois les capteurs de force (8).

4. Machine-outil selon l'une des revendications précédentes, **caractérisée en ce que** les capteurs de force sont des capteurs à ondes acoustiques de surface (SAW) (8), et **en ce qu'**il est prévu des moyens de radiotransmission (18, 20) pour l'émission sans fil de signaux radio à destination des capteurs SAW (8) et la réception sans fil de signaux radio en provenance des capteurs SAW (8).
